# EUROPEAN PATENT APPLICATION

(11) **EP 4 091 598 A1**
(43) Date of publication of application: **23.11.2022**
(21) Application number: 21740655.2
(22) Date of filing: 07.01.2021
(51) Int. Cl.: A61J 3/00, G06T 5/00

(54) **IMAGE PROCESSING APPARATUS AND METHOD**

(30) Priority: 17.01.2020 JP 2020006079
(71) Applicant: FUJIFILM Toyama Chemical Co., Ltd., Chuo-ku Tokyo 104-0031 (JP)
(72) Inventor: IWAMI, Kazuchika, Ashigarakami-gun, Kanagawa 258-8538 (JP); HANEDA, Shinji, Tokyo 104-0031 (JP)
(74) Representative: Jeffrey, Philip Michael
(86) International application number: PCT/JP2021/000328
(87) International publication number: WO 2021/145266

(57) **Abstract**

An image processing apparatus and method that can enhance visibility of medicines are provided. An image obtained by imaging medicines is acquired, the medicines are detected from the acquired image, and images of the detected medicines are cropped to generate individual medicine images. It is determined whether visibility of each generated individual medicine image is good or poor, and an individual medicine image with poor visibility is subjected to processing to enhance visibility and displayed on a display device.

## Description

### BACKGROUND OF THE INVENTION

### 1. Field of the Invention

The present invention relates to image processing apparatuses and methods, and more particularly relates to an image processing apparatus and method that process a taken image of a medicine.

### 2. Description of the Related Art

Machine audit is known as a technique to support audit works of prescription medicines by pharmacists. In the machine audit, image recognition is used to perform audit processing.

International Publication No. WO 2016/047569 (hereinafter referred to as "Patent Literature 1") discloses an apparatus which performs machine audit of one-dose packaged medicines for each one-dose package and displays a result of the machine audit for each one-dose package. The apparatus in Patent Literature 1 displays taken images of the medicines in each one-dose package, along with the results of the machine audit. Because the taken images of the medicines in each one-dose package are displayed along with the results of machine audit, it is possible to support a visual audit by pharmacists.

### Citation List

Patent Literature 1: International Publication No. WO 2016/047569

### SUMMARY OF THE INVENTION

The apparatus in Patent Literature 1 images each medicine under the same condition. For this reason, the apparatus in Patent Literature 1 displays the taken images of the respective medicines under the same background color.

The medicines have various colors. Accordingly, in the apparatus in Patent Literature 1, the visibility of the medicines may significantly be deteriorated at the time of displaying the taken images. For example, transparent medicines, imaged under the condition of a black background, assimilate into the background, which results in significant deterioration in visibility of the medicines. The same problem also arises when the color of the medicine is similar to the background color.

The present invention has been made in view of such circumstances, and aims to provide an image processing apparatus and method that can enhance the visibility of medicines.
(1) An image processing apparatus including a processor, in which the processor is configured to: acquire a first taken image obtained by imaging medicines; detect the medicines from the first taken image; crop images of the detected medicines from the first taken image to generate individual medicine images; and perform processing to enhance visibility of an individual medicine image with poor visibility.
(2) The image processing apparatus according to aspect (1), in which whether visibility of each individual medicine image is good or poor, and performs the processing to enhance visibility of the individual medicine image with poor visibility.
(3) The image processing apparatus according to aspect (2), in which the processor determines whether the visibility of each individual medicine image is good or poor based on a difference between a pixel value in a region of a medicine in the individual medicine image and a reference value.
(4) The image processing apparatus according to aspect (3), in which the reference value is a pixel value in a region other than the region of the medicine in each individual medicine image or in the first taken image.
(5) The image processing apparatus according to aspect (2), in which, in a case where the medicines are prepared based on prescription information, the processor acquires the prescription information and determines whether visibility of each individual medicine image is good or poor based on the prescription information.
(6) The image processing apparatus according to aspect (5), in which the processor determines whether visibility of each individual medicine image is good or poor based on information about a type of each medicine identified based on the prescription information.
(7) The image processing apparatus according to aspect (6), in which the processor determines that the visibility of the individual medicine image is poor in a case where the medicine is transparent or semi-transparent.
(8) The image processing apparatus according to aspect (6), in which the processor determines that the visibility of the individual medicine image is poor in a case where the medicine has a color similar to a background color of the first taken image.
(9) The image processing apparatus according to any one of aspects (1) to (8), in which the processor applies image processing for emphasizing an edge of the medicine to the individual medicine image with poor visibility, to enhance visibility.
(10) The image processing apparatus according to any one of aspects (1) to (8), in which the processor acquires a second taken image obtained by imaging the medicines under the condition of a background color different from a background color of the first taken image, and replaces the individual medicine image with poor visibility, with an image cropped from the second taken image so as to enhance visibility.
(11) The image processing apparatus according to any one of aspects (1) to (10), in which the processor generates a display image that displays a list of the individual medicine images.
(12) The image processing apparatus according to aspect (11), in which the processor displays the display image on a display device.
(13) The image processing apparatus according to any one of aspects (1) to (12), in which the first taken image is an image obtained by imaging the medicines in one-dose package.
(14) An image processing method, including the steps of: acquiring a first taken image obtained by imaging medicines; detecting the medicines from the first taken image; cropping images of the detected medicines from the first taken image to generate individual medicine images; and performing processing to enhance visibility of an individual medicine image with poor visibility.

According to the present invention, the visibility of medicines can be enhanced.

### BRIEF DESCRIPTION OF THE DRAWINGS

Figure 1 is a block diagram showing an example of a system configuration of a medicine inspection support system.
Figure 2 is a plan view showing an example of medicines in one-dose packages.
Figure 3 is a plan view showing a schematic configuration of an imaging device.
Figure 4 is a side view showing the schematic configuration of the imaging device.
Figure 5 is a block diagram showing a schematic configuration of a medicine inspection support device.
Figure 6 is a block diagram of functions implemented by a processing device.
Figure 7 is a conceptual view of extraction of individual medicine images.
Figure 8 is a conceptual view of a method of obtaining a pixel value of a center part of an individual medicine image so as to obtain a pixel value in a region of the medicine.
Figure 9 schematically shows an example of image processing.
Figure 10 shows an example of edge emphasis.
Figure 11 shows an example of an inspection result display image.
Figure 12 shows a flowchart showing a procedure for inspecting medicines using the medicine inspection support system.
Figure 13 is a flowchart showing a procedure of the processing to enhance visibility of the individual medicine images.
Figure 14 is a plan view showing a schematic configuration of an imaging device.
Figure 15 is a side view showing the schematic configuration of the imaging device.
Figure 16 shows an example of images obtained by imaging.
Figure 17 is a block diagram of functions implemented by a processing device.
Figure 18 schematically shows an example of image switching.
Figure 19 shows an example an inspection result display image.
Figure 20 shows an example of a display image in a case of switching the display for only one surface.
Figure 21 is a block diagram showing an example of functions implemented by a processing device.
Figure 22 shows an example of a medicine DB.
Figure 23 shows another example in a case of displaying taken images of medicines.

### DESCRIPTION OF THE PREFERRED EMBODIMENTS

Hereinafter, preferred embodiments of the present invention are described in detail with reference to accompanying drawings.

### [First Embodiment]

Here, description describes, for an example, a case where the present invention is applied to a device for supporting inspection of medicines in one-dose package by a pharmacist. "Packaging for one dose (one-dose package)" means that a plurality of medicines are collectively packaged in a package. Generally, medicines to be taken at the same time are packaged in a one-dose package. Pharmacists prepare medicines and package medicines for one dose in each one-dose package based on prescription information. For the medicines to be packaged in a one-dose package, the pharmacists confirm whether the medicines for one dose are packaged as prescribed, after one-dose packaging. A medicine inspection support device according to the present embodiment supports subsequent confirmation works by pharmacists.

### [System Configuration]

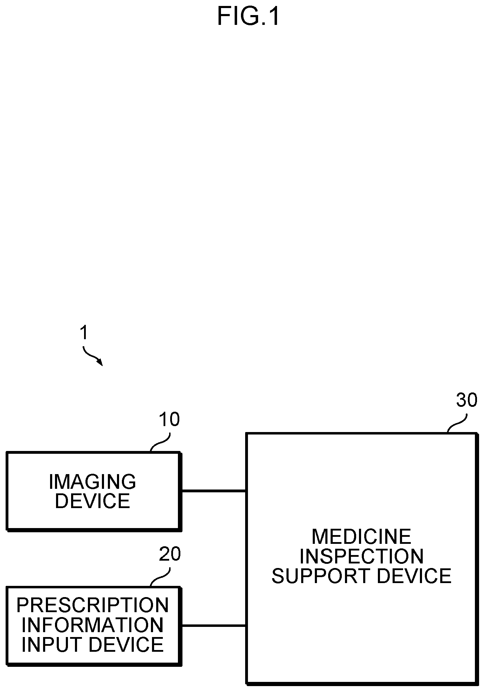

Figure 1 is a block diagram showing an example of a system configuration of the medicine inspection support system.

As shown in Figure 1, a medicine inspection support system 1 includes an imaging device 10, a prescription information input device 20, and a medicine inspection support device 30.

### [Imaging Device]

The imaging device 10 images medicines in a one-dose package. The images taken by the imaging device 10 are input into the medicine inspection support device 30.

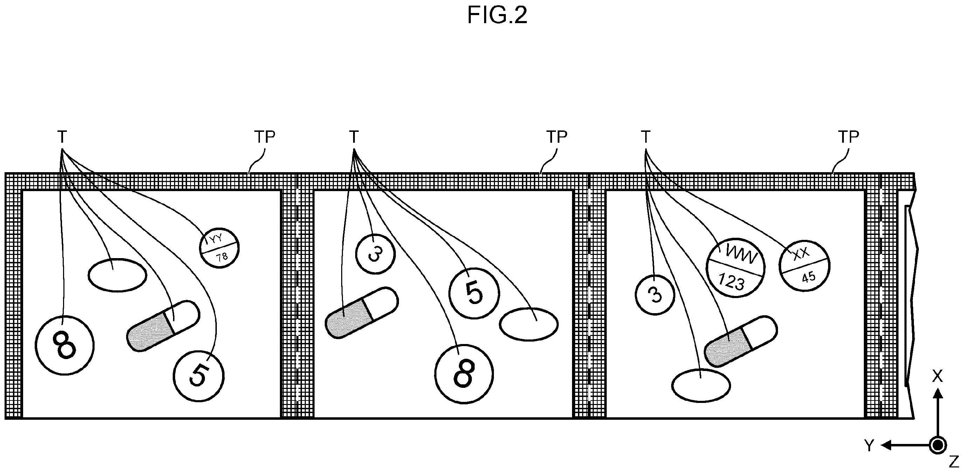

Figure 2 is a plan view showing an example of medicines in one-dose packages.

As shown in Figure 2, by one-dose packaging, a plurality of medicines T are contained in a single medicine package TP. Here, Figure 2 illustrates medicine packages TP continuously connected in a shape of a strip (medicine package strip). The medicine package TP is made up of a transparent body (including a semi-transparent body) to allow imaging of the medicines T in a state where the medicines T are contained in the medicine package TP. The medicines T to be packaged for one dose are mainly tablets, capsules, etc. The processing of one-dose packaging is performed by using, for example, a dispensing packaging device, etc.

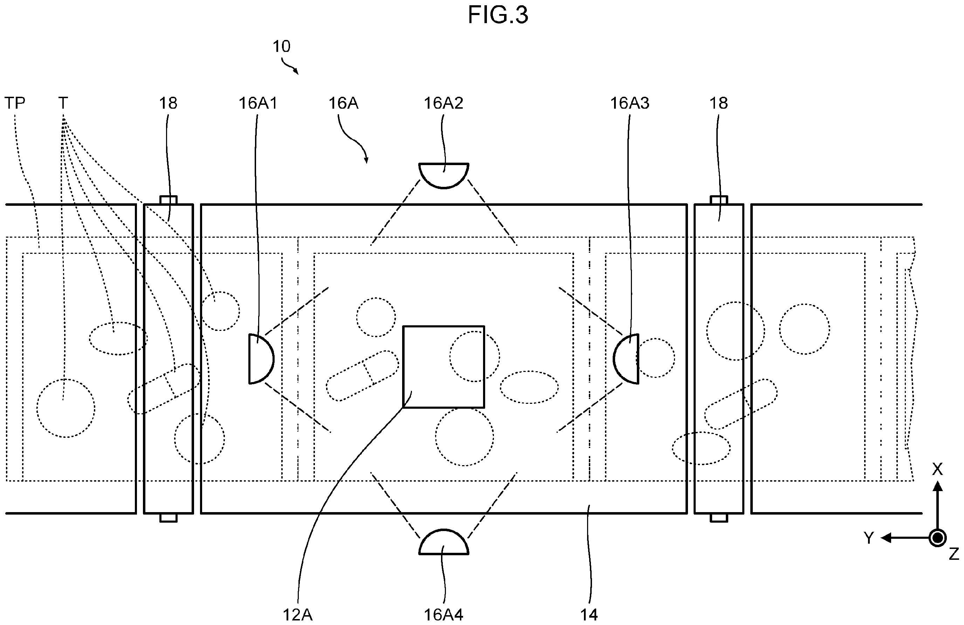

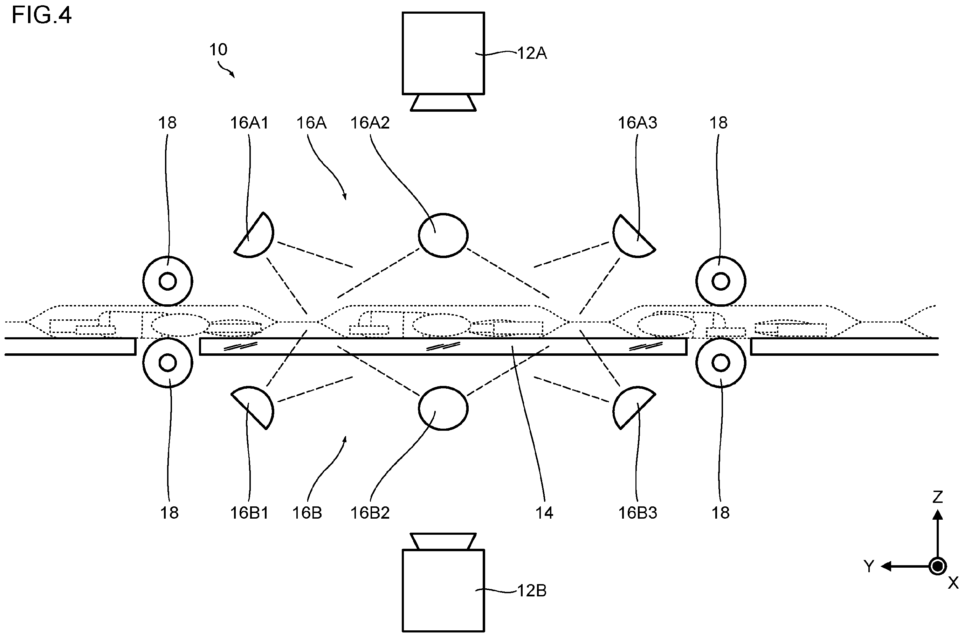

Figures 3 and 4 are a plan view and a side view each showing a schematic configuration of the imaging device.

The imaging device 10 includes two cameras (a first camera 12A and a second camera 12B) to image both surfaces of a medicine package TP placed on a transparent stage 14.

The stage 14 is installed horizontally. The first camera 12A and the second camera 12B are arranged facing each other across the stage 14. The first camera 12A directly faces a first surface (front surface) of the medicine package TP to image the first surface of the medicine package TP. The second camera 12B directly faces a second surface (back surface) of the medicine package TP to image the second surface of the medicine package TP. Note that the second surface of the medicine package TP is the surface in contact with the stage 14, and the first surface of the medicine package TP is the surface opposite to the second surface.

Across the stage 14, a first lighting device 16A is provided on the side of the first camera 12A, and a second lighting device 16B is provided on the side of the second camera 12B.

The first lighting device 16A emits illumination light to the first surface of the medicine package TP placed on the stage 14. The first lighting device 16A has four radially arranged light emitting units 16A1 to 16A4 to emit illumination light from four orthogonal directions. Light emission of the respective light emitting units 16A1 to 16A4 is controlled separately.

The second lighting device 16B emits illumination light to the second surface of the medicine package TP placed on the stage 14. The second lighting device 16B has four radially arranged light emitting units 16B1 to 16B4 to emit illumination light from four orthogonal directions. Light emission of the respective light emitting units 16B1 to 16B4 is controlled separately.

Imaging is performed as follows. First, the first surface (front surface) of the medicine package TP is imaged using the first camera 12A. During imaging, the light emitting units 16A1 to 16A4 in the first lighting device 16A are each made to emit light. Then, the second surface (back surface) of the medicine package TP is imaged using the second camera 12B. During imaging, the light emitting units 16B1 to 16B in the second lighting device 16B are each made to emit light. With such imaging, the first surface and the second surface of the medicine package TP are imaged. As mentioned above, the medicine package TP is transparent. Therefore, when the medicine package TP is imaged, the medicines T contained in the medicine package TP are imaged. In other words, the medicines T in a one-dose package are imaged.

Here, imaging is performed in a dark room state. Therefore, the only light that is emitted to the medicine package TP during imaging is the illumination light from the first lighting device 16A and the second lighting device 16B. The medicine package TP is imaged in this way to image each medicine T with a black background.

The medicine package TP is nipped by rotating rollers 18 and conveyed to the stage 14. The medicine package TP is flattened during conveyance to remove overlapping. In the case of imaging a medicine package strip in which a plurality of medicine packages TP are continuously connected in the shape of a strip, once imaging of one medicine package is finished, the strip is conveyed by a distance corresponding to one medicine package, and imaging of a next medicine package TP is performed.

### [Prescription Information Input Device]

The prescription information input device 20 inputs prescription information of medicines to be inspected into the medicine inspection support device 30. The prescription information is the information stated in prescription. The prescription information includes information such as a name, quantity, usage, dosage, and identification information of each prescribed medicine. Note that it is not necessarily needed to input all the information stated in the prescription into the prescription information. Among the information stated in the prescription, information required for inspecting the pertinent medicine may be sufficient.

For example, the prescription information input device 20 may be constituted by a receipt computer. In this case, the receipt computer, which constitutes the prescription information input device 20, is communicably connected to the medicine inspection support device 30. The medicine inspection support device 30 communicates with the receipt computer to acquire prescription information.

In addition, the prescription information input device 20 can adopt a system, such as a system for optically reading text information stated in the prescription to acquire prescription information, and inputting the prescription information into the medicine inspection support device 30, a system for reading a code (for example, a bar code, a two-dimensional code, etc.) provided in the prescription to acquire prescription information, and inputting the prescription information into the medicine inspection support device 30, and a system for inputting the information stated in prescription into the medicine inspection support device 30 using a keyboard or other means, and so on.

Furthermore, the prescription information may be the same as the information stated in the prescription, or may be information that is set, changed, or the like, by a doctor and/or a pharmacist based on the information stated in the prescription. For example, "prescription information" may also include information obtained by changing an original medicine to a late-coming medicine (generic medicine) when the name of the original medicine is stated in the prescription, selecting an original medicine or a late-coming medicine when only a general name of the medicine is stated in the prescription, or the like.

### [Medicine Inspection Support Device]

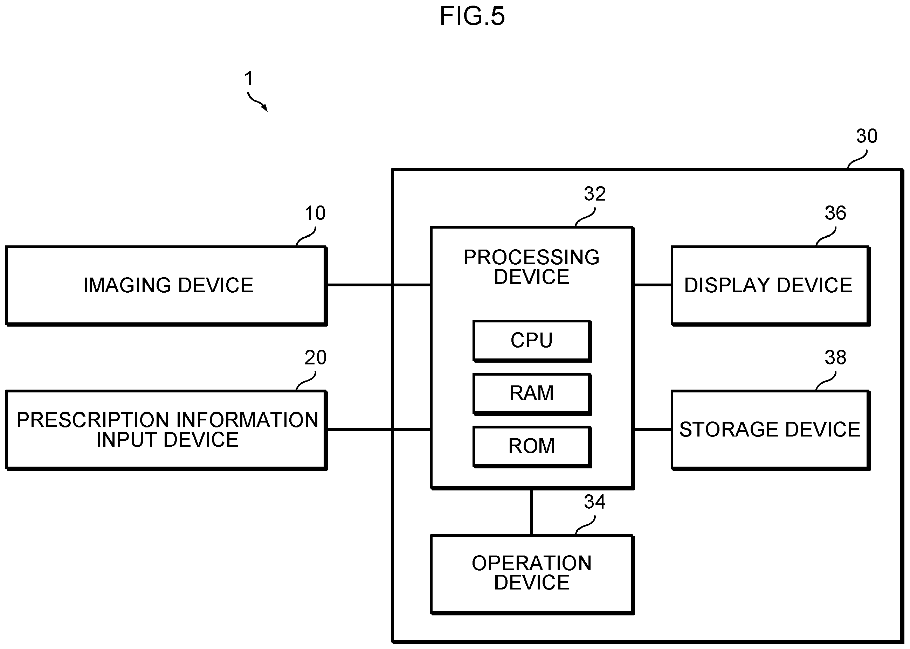

Figure 5 is a block diagram showing a schematic configuration of the medicine inspection support device.

As shown in Figure 5, the medicine inspection support device 30 includes a processing device 32, an operation device 34, a display device 36 and a storage device 38.

The processing device 32 is constituted of a computer including a central processing unit (CPU), a read only memory (ROM), and a random access memory (RAM). The CPU executes predetermined programs so that the processing device 32 implements various functions. The functions implemented by the processing device 32 are described later. The processing device 32 is an example of the image processing apparatus.

The operation device 34 receives operational inputs from a user. For example, the operation device 34 is constituted of a keyboard, a mouse, a touch panel, etc.

The display device 36 displays various information. The display device 36 is constituted of, for example, a liquid crystal display (LCD), an organic electro-luminescence display (OELD), etc.

The storage device 38 stores various information. For example, the storage device 38 is constituted of a hard disc drive (HDD). The programs executed by the CPU of the processing device 32 and information required to execute the programs are stored in the storage device 38 or the ROM.

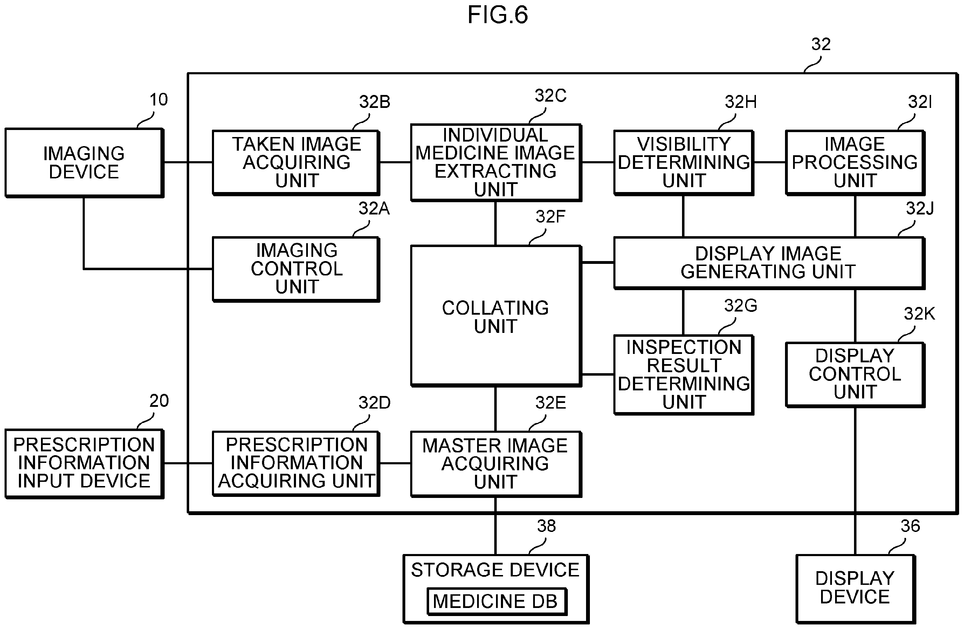

Figure 6 is a block diagram of functions implemented by the processing device.

The CPU executes predetermined programs so that the processing device 32 implements the functions of an imaging control unit 32A, a taken image acquiring unit 32B, an individual medicine image extracting unit 32C, a prescription information acquiring unit 32D, a master image acquiring unit 32E, a collating unit 32F, an inspection result determining unit 32G, a visibility determining unit 32H, an image processing unit 321, a display image generating unit 32J, and a display control unit 32K.

The imaging control unit 32A controls imaging of a medicine package by the imaging device 10. As described above, the imaging device 10 images the first surface (front surface) and the second surface (back surface) of the medicine package.

The taken image acquiring unit 32B acquires a taken image of the medicine package, which is imaged by the imaging device 10, from the imaging device 10. As described above, the taken image of the medicine package acquired from the imaging device 10 is an image of medicines in a one-dose package. The image is an example of the first taken image.

The individual medicine image extracting unit 32C extracts images (individual medicine images) of respective medicines from the taken image of the medicine package(taken image of medicines in the one-dose package). The images are extracted in a following procedure as one example.

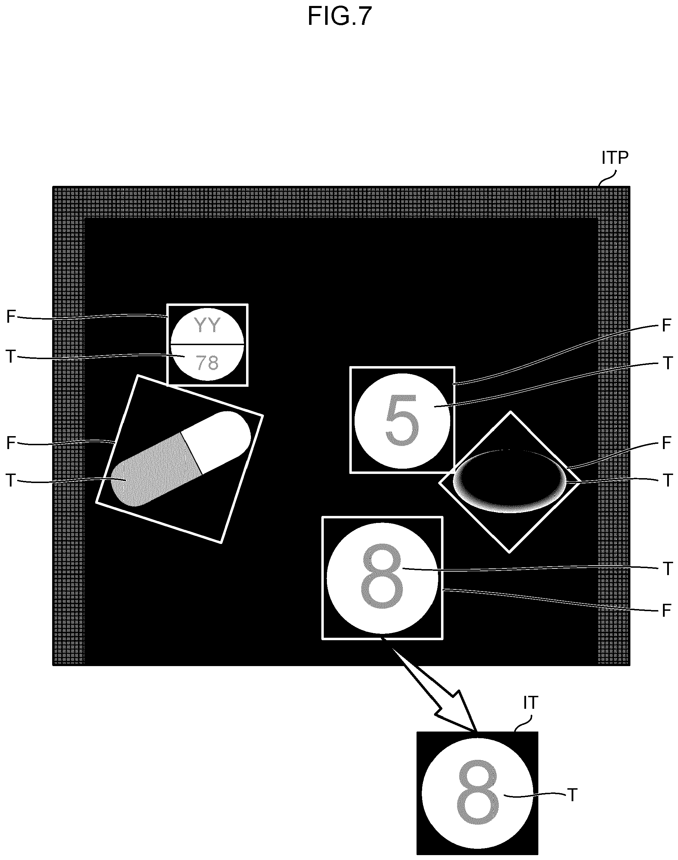

Figure 7 is a conceptual view of the extraction of individual medicine images. First, individual medicines T are detected from the acquired taken image ITP of the medicine package. To detect the medicines T, publicly known techniques can be adopted. For example, it is possible to adopt a method of detecting the medicines T using an image recognition model generated by machine learning, deep learning, etc. Then, the detected individual medicines T are each surrounded by rectangular frames F. The frame F surrounds each of the medicines T with a least possible size to surround the medicines T. Regions surrounded by the frames F are cropped, and images of the respective medicines T are extracted. This generates individual medicine images IT corresponding to the respective medicines. The generated individual medicine images IT are images including background. The medicine inspection support device 30 according to the present embodiment generates the individual medicine images IT on black background. The individual medicine images IT are extracted from all the taken images ITP.

The prescription information acquiring unit 32D acquires prescription information of medicines to be inspected from the prescription information input device 20.

The master image acquiring unit 32E acquires master images of the medicines included in the prescription from a medicine data base (DB) based on the prescription information acquired in the prescription information acquiring unit 32D. The medicine DB is stored in the storage device 38. The medicine DB stores information about various medicines (medicines that can be prepared). Information on a medicine includes images (master images) of the medicine. As the master images, an image of the front surface of the medicine and an image of the back surface of the medicine are prepared. In the case of medicines without distinction between the front side and the back side (for example, capsule), two images are prepared: one image of a surface with an engravement or a print thereon being defined as a front surface; and the other image of a surface opposite to the front surface being defined as a back surface. In the case of a medicine which does not have an engravement nor a print, two images are prepared with a given surface defined as a front surface and a surface opposite to the front surface being defined as a back surface.

The collating unit 32F collates the individual medicine image extracted by the individual medicine image extracting unit 32C with the master images acquired in the master image acquiring unit 32E. By collating the individual medicine image with the master images, it is possible to identify a type of the medicine imaged in each of the individual medicine images. Moreover, it is also possible to determine whether the medicines contained in the medicine package (medicines in the one-dose package) to be inspected are packaged for one dose as prescribed. For collating processing, publicly known techniques are adopted. For example, collating is performed by extracting a feature quantity from each of the individual medicine images and comparing the feature quantity with a feature quantity extracted from the corresponding master images.

The inspection result determining unit 32G determines whether the medicines contained in the medicine package (medicines in the one-dose package) to be inspected are packaged for one dose as prescribed, based on the collating result by the collating unit 32F. Determination is performed for each medicine package. In other words, it is determined whether or not there is excess or shortage of medicines contained in each medicine package.

The visibility determining unit 32H determines whether each individual medicine image extracted by the individual medicine image extracting unit 32C has good visibility or poor visibility. The good/poor visibility is determined based on whether the medicine is easily viewed when the individual medicine image is displayed on the display device 36. An image that allows the medicine to be clearly distinguished from the background at first glance is an image with good visibility. On the other hand, an image that hardly allows the medicine to be distinguished from the background is an image with poor visibility. In the medicine inspection support device 30 according to the present embodiment, the visibility determining unit 32H determines good/poor visibility of each individual medicine image based on a pixel value in a region of the medicine in each individual medicine image. Specifically, a pixel value V1 in the region of the medicine in the individual medicine image and a pixel value V2 in a region other than the region of the medicine are obtained. Based on a difference (VI-V2) between the pixel values, the good/poor visibility of the individual medicine image is determined. In a case where the difference (V1-V2) is equal to or more than a threshold, the visibility is determined to be good. In a case where the difference (V1-V2) is less than the threshold, the visibility is determined to be poor.

The pixel value V1 in the region of the medicine is acquired by, for example, extracting the region of the medicine from the individual medicine image and averaging pixel values in the extracted region of the medicine. Meanwhile, the pixel value V2 in the region other than the region of the medicine is acquired by averaging the pixel values in the region other than the region of the medicine.

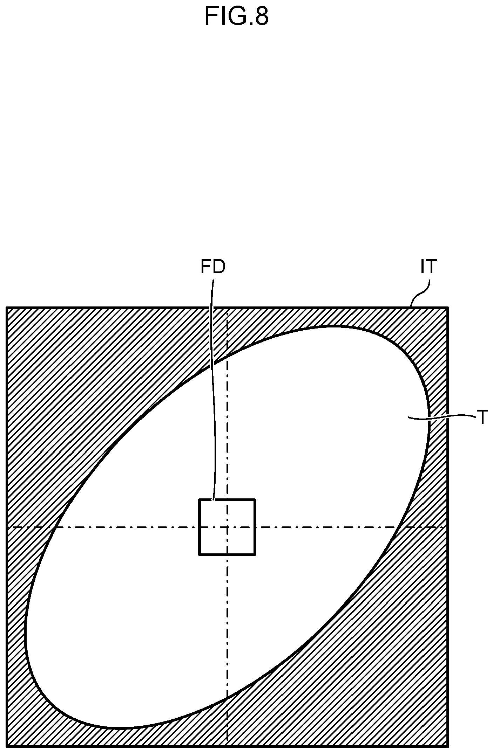

Note that in each of the individual medicine images, the medicine is arranged at the center due to the nature of cropping. Therefore, the pixel value in the center part of the individual medicine image indicates the pixel value of the region of the medicine. Therefore, it is possible to provide a configuration in which the pixel value V1 in the region of the medicine may be acquired by obtaining the pixel value in the center part of the individual medicine image. Figure 8 is a conceptual view of a method of obtaining a pixel value of the center part of the individual medicine image so as to obtain the pixel value of the region of the medicine. As shown in Figure 8, a detection frame FD of a predetermined size is set in the central portion of the individual medicine image IT, and the average of the pixel values in the detection frame FD is obtained so as to obtain the pixel value V1 in the region of the medicine.

In addition, the region other than the region of the medicine, i.e., the background, is common for all the individual medicine images. Therefore, the pixel value of the region other than the region of the medicine is a known value. Therefore, the pixel value V2 in the region other than the region of the medicine may be set as a fixed value. In this case, the pixel value in the region other than the region of the medicine is obtained in advance from the individual medicine image or the taken image of the medicine package so as to acquire the pixel value V2 in the region other than the region of the medicine. The acquired pixel value V2 can be used as a reference value for comparison.

In a case where the individual medicine images are constituted of RGB images (images expressing the color of one pixel with three primary colors: Red (R); Green (G); and Blue (B)), the individual medicine images may be converted to gray scale to obtain the pixel values in the respective regions. Or, a pixel value of a specific channel (for example, G) may be obtained.

When medicines are imaged under a condition of a black background, significant deterioration in visibility is typically found in transparent medicines. In addition, deterioration in visibility is also found in the medicines having similar color to that of the background. For example, the similar color have a color difference of 13 or less in a Lab color system under the environment of D50.

The image processing unit 321 applies predetermined image processing to an individual medicine image that has been determined to be poor in visibility by the visibility determining unit 32H, so as to enhance the visibility of the medicine in the image.

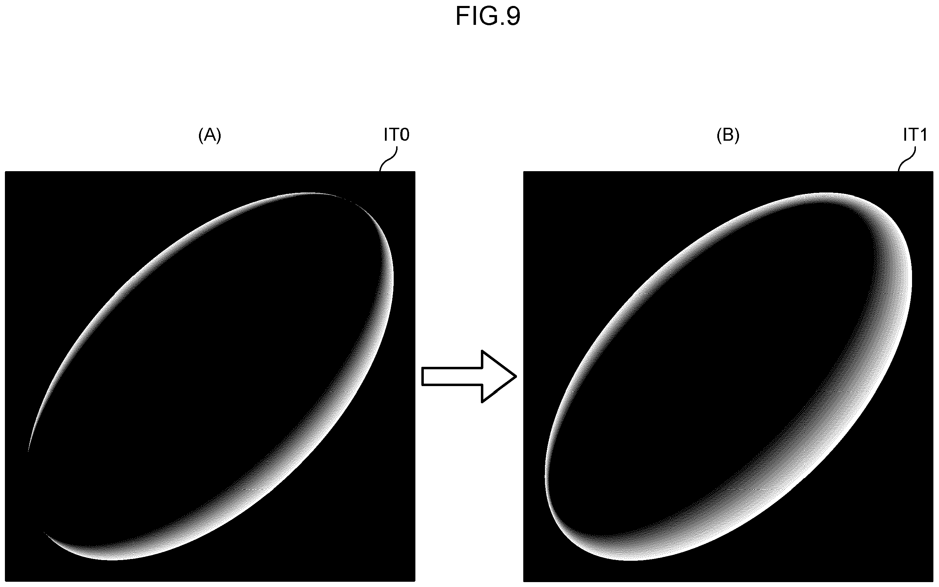

Figure 9 schematically shows an example of the image processing. The part (A) of Figure 9 shows a schematic representation of an individual medicine image IT0 before image processing. The part (B) of Figure 9 shows a schematic representation of an individual medicine image IT1 after image processing. In the example shown in Figure 9, a contour of the medicine is clarified to enhance the visibility. Edge emphasis can be cited as an example of image processing that clarifies the contour of images.

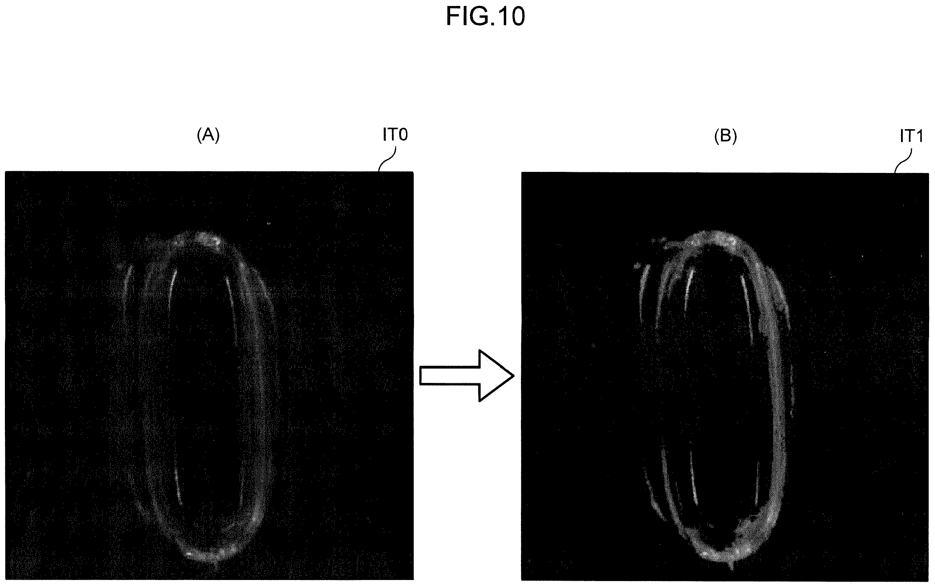

Figure 10 shows an example of edge emphasis. The part (A) of Figure 10 shows an individual medicine image IT0 before image processing. The part (B) of Figure 10 shows an individual medicine image IT1 after image processing. As shown in Figure 10, application of edge emphasis processing to the image with poor visibility can clarify a boundary between the medicine and the background, so that the visibility of the medicine can be enhanced.

The processing to enhance the visibility of the medicine in the image is not limited to this example, and other techniques can be adopted. For example, processing to change brightness, processing to change contrast, etc. can be employed. Moreover, combining these processing can also enhance the visibility of the medicine in images.

It is also possible to apply processing to images so as to enhance the visibility of the medicine in the images. For example, the contour of the medicine is extracted and then lines are added to the extracted contour so as to enhance the visibility of the medicine region.

The display image generating unit 32J generates an inspection result display image based on the determination results of inspection by the inspection result determining unit 32G. In this case, the display image generating unit 32J generates an image that displays images (individual medicine images) of medicines contained in each package, together with the inspection result of each package.

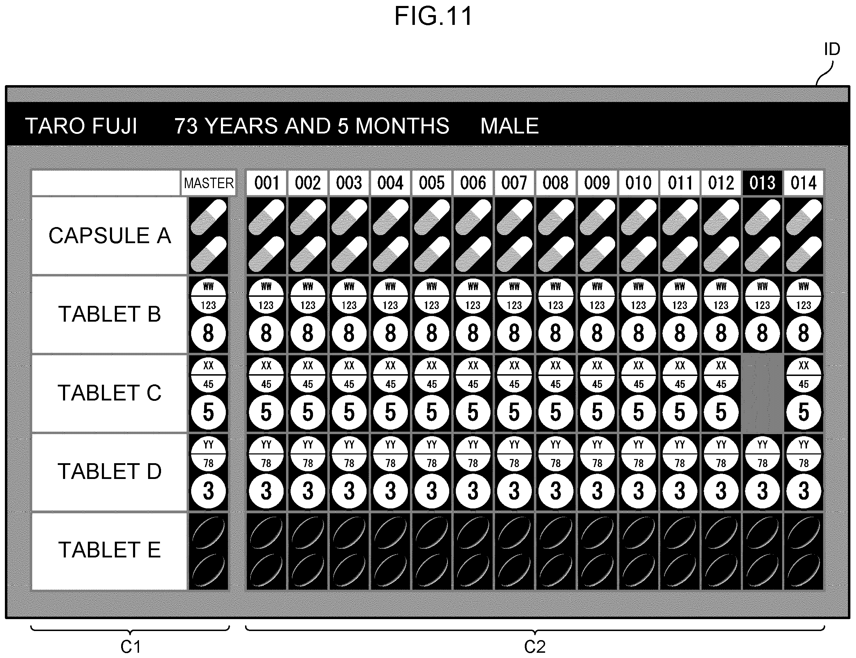

Figure 11 shows an example the inspection result display image. Figure 11 shows an example of the inspection results for fourteen packages. Figure 11 also shows an example where each package contains five medicines (capsule A, tablet B, tablet C, tablet D, tablet E), and shows an example where the tablet E is a transparent medicine.

As shown in Figure 11, an inspection result display image ID displays names of prescribed medicines, master images of the prescribed medicines, images (individual medicine images) of the medicines contained in each package, and the inspection result of each package.

The names of the prescribed medicines and the corresponding master images are displayed in a prescribed medicine information display block C1. The names of the medicines are aligned in a vertical column and displayed in the prescribed medicine information display block C1. For each medicine name, the master images corresponding to the medicine are displayed in a column on the right hand. Here, in Figure 11, out of the two master images displayed corresponding to each name, an upper image is a front surface image and a lower image is a back surface image.

The images of the medicines contained in each package and the inspection results are displayed in an inspection result display block C2. The images of medicines contained in each package are aligned in a vertical column and displayed. Hence, the images displayed in the same column indicate the images of the medicines contained in the same medicine package. The images of each medicine are also displayed in the same order as the name of the medicines displayed in the prescribed medicine information display block C1. Hence, the images displayed in the same row as the name of the medicine displayed in the prescribed medicine information display block C1 indicate the images of the medicines of the same name. Since the master images are displayed in the same row, visual inspection can easily be performed.

The top of each column (upper end) is provided with a number indicating the order of inspection of each medicine package (order of imaging). The number is used to display the inspection results. Specifically, when a medicine is not contained (packaged for one dose) as prescribed, the number indicating the medicine package is inverted and displayed. In other words, the colors of the text and the background are inverted and displayed. For example, when the medicines are contained as prescribed, their numbers are displayed with black text on white background (so-called positive text display). On the other hand, when the medicines are not contained as prescribed, their numbers are displayed with white text on black background (so-called negative text display). Figure 11 shows an example where the thirteenth medicine package (display number "013") does not conform to the prescription. The thirteenth medicine package is in short of the tablet C. In this case, the individual medicine image of the tablet C is not displayed for the thirteenth medicine package. Therefore, by confirming the display of individual medicine images, missing medicines can be recognized.

The images of each medicine displayed in the inspection result display block C2 are individual medicine images that are generated by cropping from the taken images. However, when the cropped images are displayed as they are, the visibility of the medicines may be poor. Therefore, in a case where there is an individual medicine image that has been determined to have poor visibility by the visibility determining unit 32H, the display image generating unit 32J replaces the individual medicine image with an image after image processing performed by the image processing unit 321 to generate a display image. This can facilitate a confirmation work at the time when the individual medicine images are confirmed by visual inspection.

The display control unit 32k controls display on the display device 36. When the inspection result display image is generated by the display image generating unit 32J, the display control unit 32K causes the display device 36 to display the generated display image.

### [Operation]

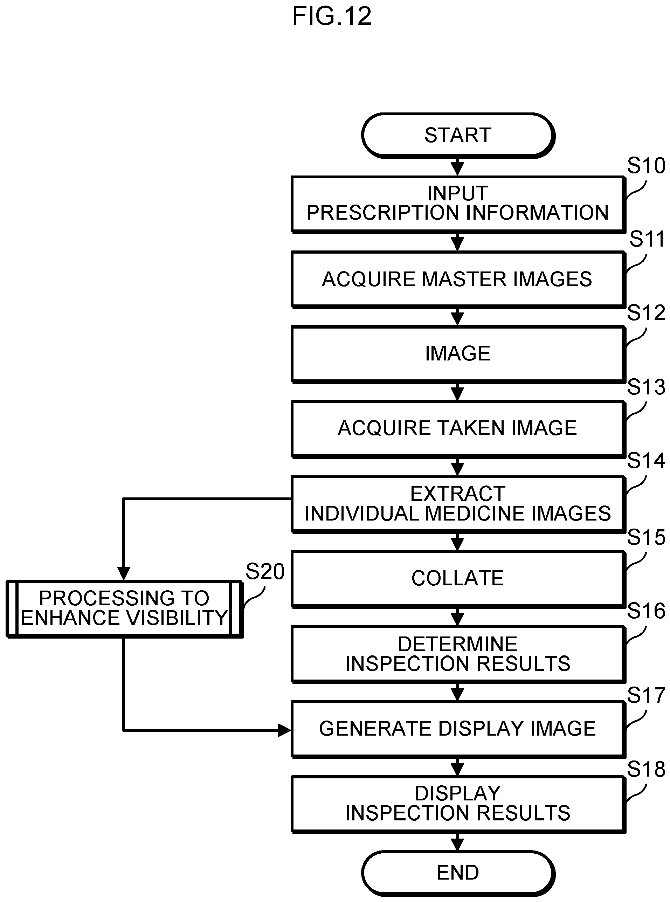

Figure 12 is a flowchart showing a procedure for inspecting medicines using the medicine inspection support system.

First, prescription information of medicines to be inspected is input into the medicine inspection support device 30 (step S10). The prescription information is input from the prescription information input device 20 to the medicine inspection support device 30.

The medicine inspection support device 30 acquires the input prescription information. The medicine inspection support device 30 acquires the master images of the medicines included in the prescription from the medicine DB based on the acquired prescription information (step S11).

Meanwhile, the imaging device 10 images the medicines to be inspected (step S12). The imaging is performed by imaging a medicine package. By imaging the medicine package, medicines contained in the medicine package, i.e., medicines in the one-dose package, are imaged. The taken image of the medicine package (the image of the medicines in the one-dose package) is output to the medicine inspection support device 30.

The medicine inspection support device 30 acquires the taken image (first taken image) of the medicine package output from the imaging device 10 (step S13).

The medicine inspection support device 30 extracts images of individual medicines (individual medicine images) from the acquired taken image of the medicine package (taken image of medicines in the one-dose package). Extraction is performed by detecting medicines from the image and then cropping the detected medicines.

After the individual medicine images are extracted, the medicine inspection support device 30 collates the extracted individual medicine images with the master images (step S15). After collation, the medicine inspection support device 30 determines the inspection results based on the results of the collation (step S16). Specifically, the medicine inspection support device 30 determines whether the medicines contained in the medicine package (medicines in the one-dose package) to be inspected are packaged for one dose as prescribed.

After extracting the individual medicine images, the medicine inspection support device 30 also performs processing to enhance the visibility of the individual medicine images with poor visibility (step S20).

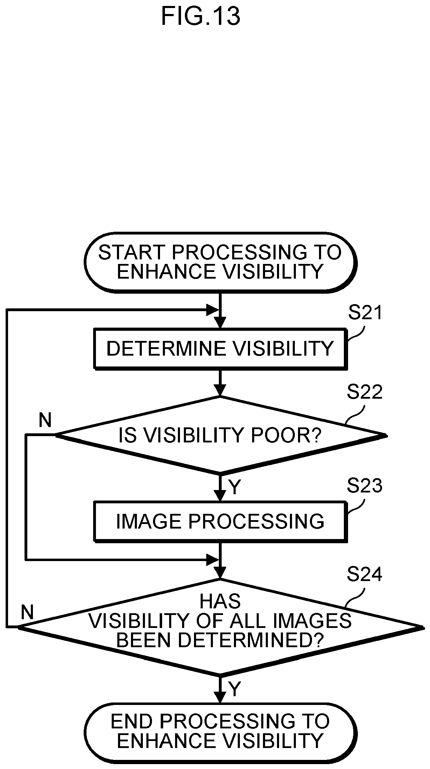

Figure 13 is a flowchart showing a procedure of the processing to enhance the visibility of the individual medicine images.

First, processing is performed to determine whether each of the individual medicine images has good visibility or poor visibility (step S21). The good/poor visibility is determined based on a difference between a pixel value in the region of the medicine in an individual medicine image and a pixel value in the region other than the region of the medicine.

Then, it is determined whether or not the determination result is poor (step S22). In a case where the determination result is poor, i.e. in a case where the visibility is poor, the image processing to enhance the visibility is performed (step S23).

On the other hand, in a case where the determination result is good, i.e. in a case where the visibility is good, no image processing is performed, and the individual medicine image is used without change, as an image for display.

In this way, in the processing to enhance the visibility of the individual medicine images, whether the images have good visibility or poor visibility is first determined, and the image processing to enhance the visibility is applied to only the images that have been determined to have poor visibility. This processing is performed on all the extracted individual medicine images. Therefore, it is determined whether all the individual medicine images have been determined (step S24). Once all the individual medicine images have been determined, the processing to enhance the visibility of the individual medicine images ends.

Back to the main flow, once the processing to enhance the visibility and processing to determine the inspection results are completed, the medicine inspection support device 30 generates a display image showing the inspection results (step S17). The medicine inspection support device 30 displays the generated display image on the display device 36 (step S18).

As shown in Figure 11, the inspection result display image displays the names of prescribed medicines, the master images of the prescribed medicines, images (individual medicine images) of the medicines contained in each package, and the inspection results of each package.

Here, in a case where the individual medicine images are subjected to the processing to enhance the visibility, the images after processing are displayed. In other words, the images directly cropped from the taken image are replaced with the images after processing and displayed. In the images after processing, the medicines have an enhanced visibility. This can facilitate visual confirmation works.

As described in the foregoing, according to the medicine inspection support device 30 in the present embodiment, visibility is enhanced as necessary at the time of displaying the taken images of medicines. As a result, it is possible to facilitate visual inspection of medicines.

### [Second Embodiment]

In the above embodiment, the image processing is applied to the individual medicine images with poor visibility so as to enhance visibility. In the present embodiment, in a case where there is an individual medicine image with poor visibility, the image is replaced with an image taken under a different condition to enhance visibility. Specifically, the individual medicine image with poor visibility is replaced with an image taken under a condition with a different background color to enhance the visibility.

### [Imaging Device]

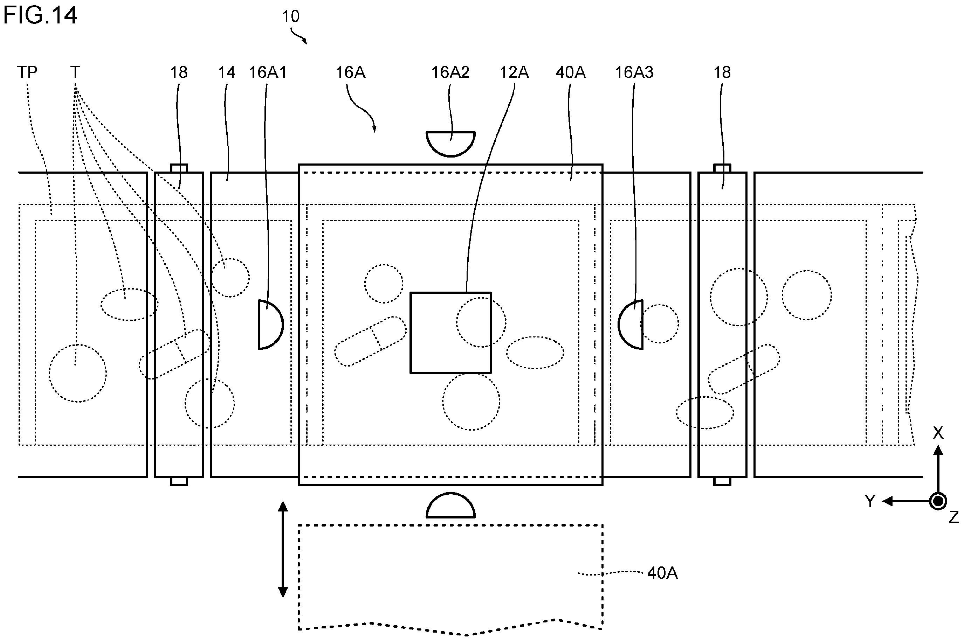

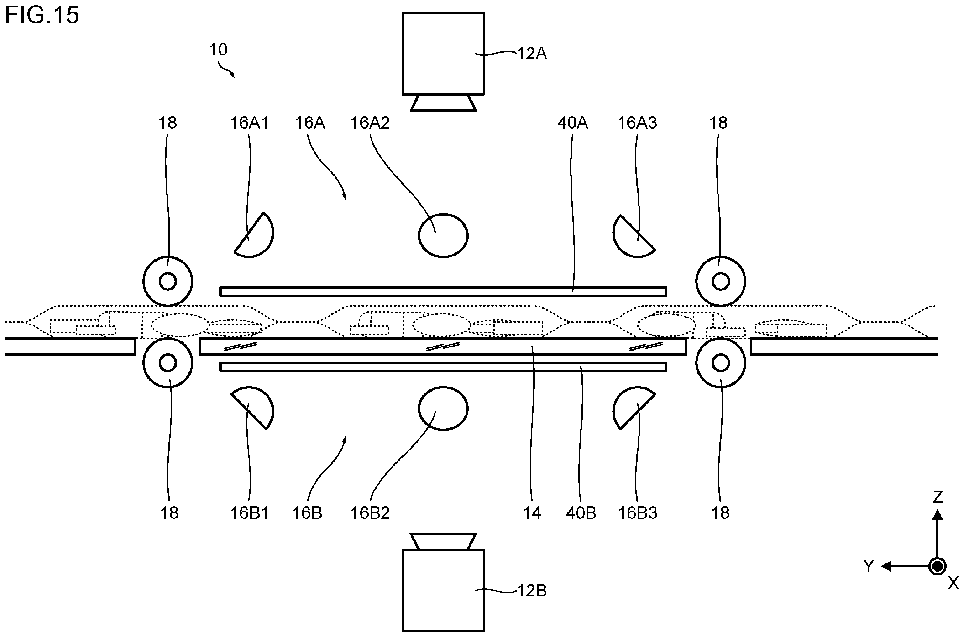

The imaging device is configured so that medicines may be imaged under conditions with different background colors. Figures 14 and 15 are a plan view and a side view each showing a schematic configuration of an imaging device according to the present embodiment.

The imaging device 10 according to the present embodiment is different from the imaging device according to the first embodiment in that a first image plate 40A and a second image plate 40B are provided. Therefore, only the configuration and function of the first image plate 40A and the second image plate 40B are described here.

The first image plate 40A and the second image plate 40B are made of white plates. The first image plate 40A and the second image plate 40B are arranged on an upper side and a lower side across the stage 14, and are each arranged parallel to the stage 14. The first image plate 40A is arranged on the side of the first camera 12A, and the second image plate 40B is arranged on the side of the second camera 12B.

The first image plate 40A and the second image plate 40B are each driven by a drive mechanism, which is not shown, to slidably move between an imaging position and a retreating position in a horizontal direction. The first image plate 40A moves to the imaging position to be directly above the stage 14 by (see Figure 14). Accordingly, the upper surface (front surface) of the medicine package placed on the stage 14 is covered with the first image plate 40A. The first image plate 40A moves to the retreating position to be at a position out of the stage. The second image plate 40B moves to the imaging position to be directly below the stage 14. Accordingly, the lower surface (back surface) of the medicine package placed on the stage 14 is covered with the second image plate 40B. The second image plate 40B moves to the retreating position to be at a position out of the stage.

### [Imaging of Medicine Package by Imaging Device]

Imaging of medicine package (imaging of medicines in a one-dose package) is performed as follows.

First, the first surface (front surface) and the second surface (back surface) of a medicine package TP are imaged in a state where the first image plate 40A and the second image plate 40B are retreated to the retreating positions. The first surface of the medicine package TP is imaged by the first camera 12A while light is emitted from the first lighting device 16A. The second surface of the medicine package TP is imaged by the second camera 12B while light is emitted from the second lighting device 16B.

Next, the first surface of the medicine package TP is imaged in a state where the second image plate 40B is located at the imaging position. The imaging is performed using the first camera 12A while light is emitted from the first lighting device 16A. After imaging, the second image plate 40B is retreated to the retreating position.

Next, the second surface of the medicine package TP is imaged in a state where the first image plate 40A is located at the imaging position. The imaging is performed using the second camera 12B while light is emitted from the second lighting device 16B. After imaging, the second image plate 40B is retreated to the retreating position.

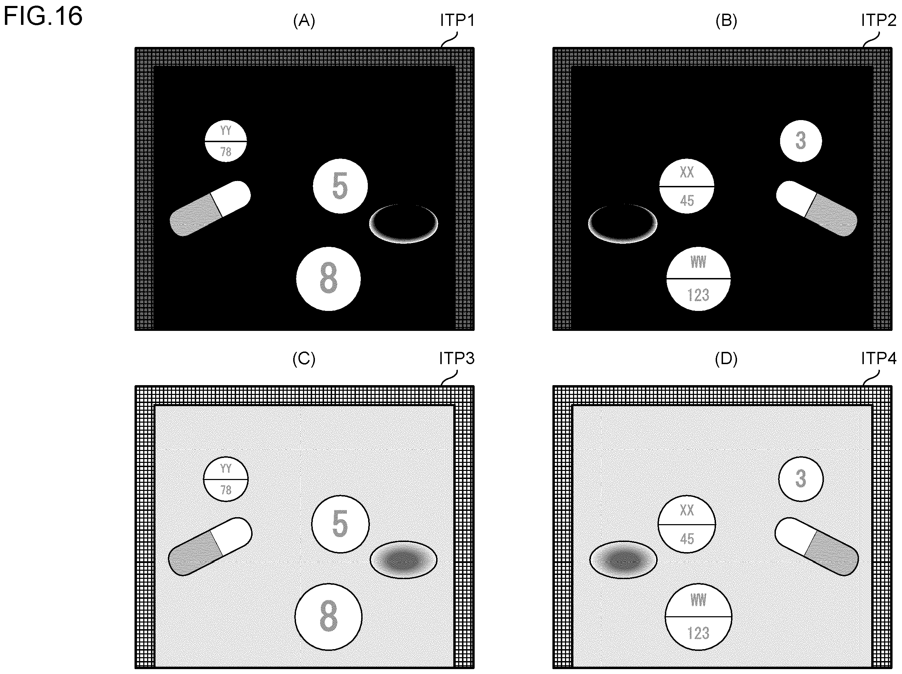

Figure 16 shows an example of images obtained by imaging.

The parts (A) and (B) of Figure 16 show examples of taken images obtained when imaging is performed while the first image plate 40A and the second image plate 40B are retreated. The part (A) of Figure 16 shows an example of a taken image ITP1 obtained when the first surface of the medicine package is imaged. The part (B) of Figure 16 shows an example of a taken image ITP2 obtained when the second surface of the medicine package is imaged. As shown in the parts (A) and (B) of Figure 16, in a case where imaging is performed while the first image plate 40A and the second image plate 40B are retreated, each medicine is imaged on black background. The taken images ITP1 and ITP2 are examples of the first taken image.

The parts (C) and (D) of Figure 16 show examples of taken images obtained when imaging is performed while the first image plate 40A and the second image plate 40B are inserted. The part (C) of Figure 16 shows an example of a taken image ITP3 obtained when the first surface of the medicine package is imaged while the second image plate 40B is inserted. The part (D) of Figure 16 shows an example of a taken image ITP4 obtained when the second surface of the medicine package is imaged while the first image plate 40A is inserted. As shown in the parts (A) and (B) of Figure 16, in a case where imaging is performed while the first image plate 40A and the second image plate 40B are inserted, each medicine is imaged on white (or gray) background. The taken images ITP3 and ITP4 are examples of the second taken image.

### [Medicine Inspection Support Device]

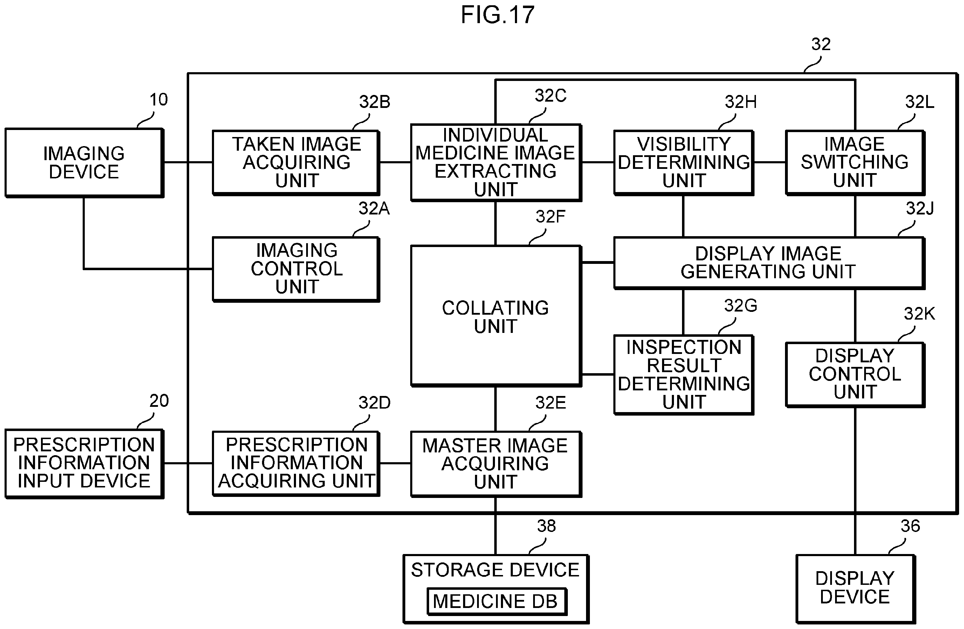

Figure 17 is a block diagram of the functions implemented by a processing device of a medicine inspection support device in the present embodiment.

As shown in Figure 17, the processing device 32 of the medicine inspection support device according to the present embodiment is different from the processing device 32 according to the first embodiment in that a function of an image switching unit 32L is provided in place of the image processing unit 321 (see Figure 6).

The processing device 32 is similar in basic operation to the processing device 32 according to the first embodiment. The processing device 32 uses individual medicine images extracted from the taken images (first taken images) on black background for collation with master images. In the case of displaying the inspection results, the individual medicine images extracted from the taken image on black background are basically used. However, in a case where an individual medicine image extracted from the taken image on the black background has poor visibility, the individual medicine image extracted from a taken image (second taken image) on white background is used.

The image switching unit 32L switches the individual medicine images to be used to display the inspection results based on the determination results by the visibility determining unit 32H. Specifically, in a case where an individual medicine image cropped from the taken image on black background has poor visibility, the image switching unit 32L switches the individual medicine image to be used to an individual medicine image cropped from the taken image on white background. Here, the cropping processing is performed by the individual medicine image extracting unit 32C. In this case, in detection of the medicines, the results of detection performed for the taken image on black background may be used.

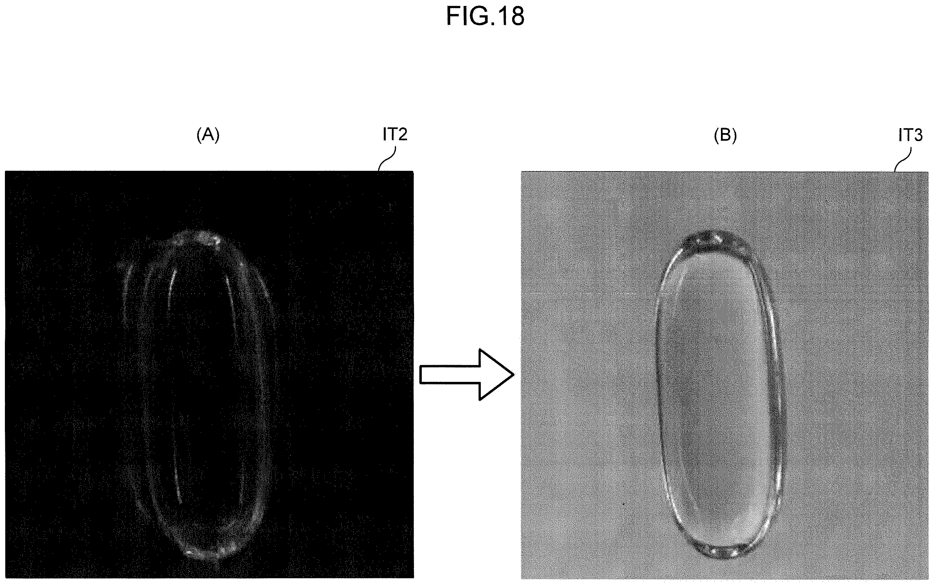

Figure 18 schematically shows an example of image switching. The part (A) of Figure 18 shows a schematic representation of an individual medicine image IT2 extracted from the taken image on black background. The part (B) of Figure 18 shows the schematic representation of an individual medicine image IT3 extracted from the taken image on white background. As shown in Figure 18, visibility can be enhanced by switching the image to be used between images on different background colors.

In a case where image switching is performed, the display image generating unit 32J uses the switched images to generate an inspection result display image.

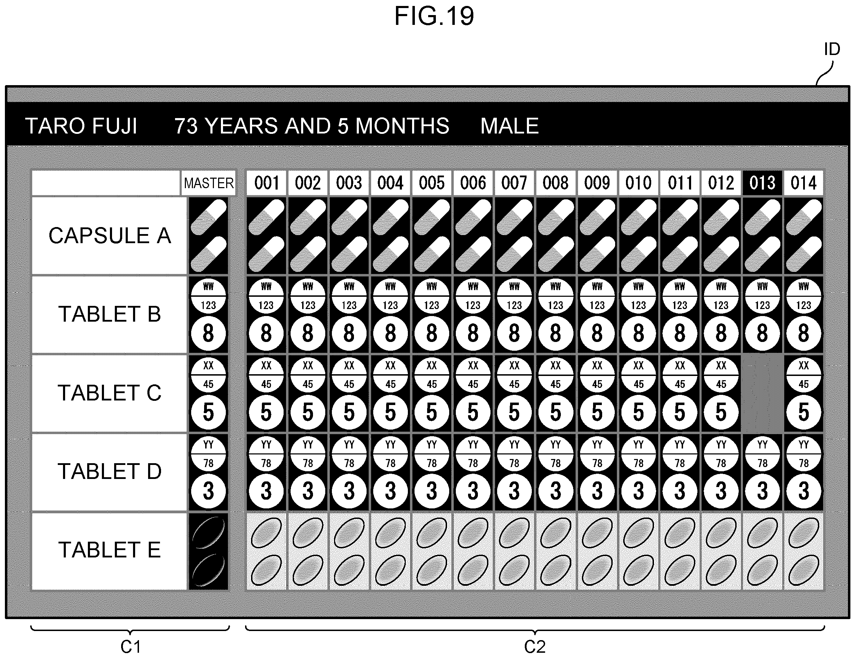

Figure 19 shows an example of the inspection result display image. Figure 19 shows an example where the images of the tablet E are all replaced with images on white background.

As shown in Figure 19, in a case where individual medicine images cropped from the taken images on black background have poor visibility, the individual images to be used in the inspection result display image are switched to individual medicine images cropped from the taken images on white background, and displayed. Thus, it is possible to enhance the visibility of medicines by displaying images taken under conditions with different background colors.

### [Modification]

The second embodiment is configured to take images having different background colors, for both the first surface and the second surface of a medicine package. However, imaging with a changed background color may be performed for only one surface. For example, only the first surface may be imaged with a changed background color. In this case, at the time of displaying the results, only the image of the first surface is switched.

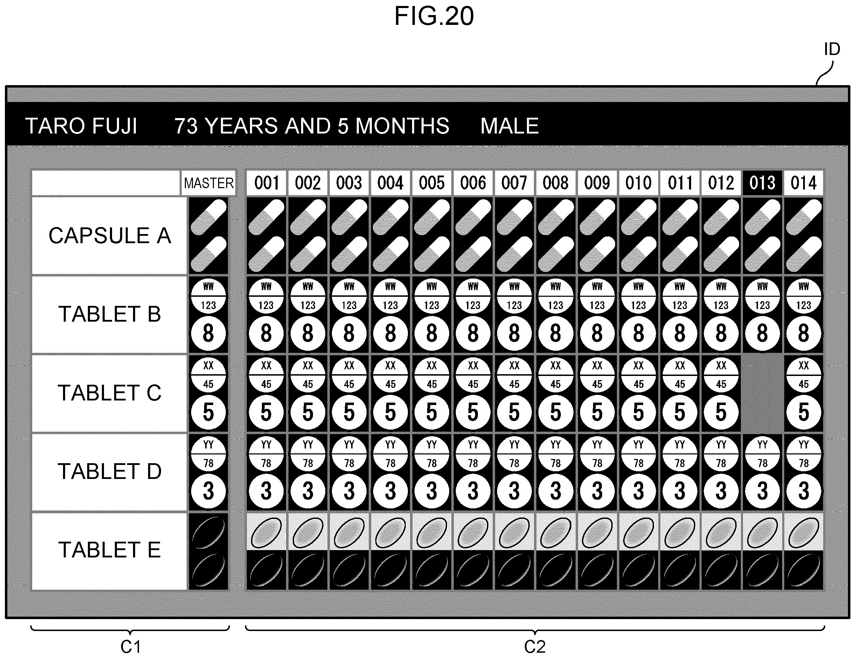

Figure 20 shows an example of the display image in a case where the image to be displayed is switched only for one surface. In Figure 20, all the images of one surface (first surface) of the tablet E are switched to images on a white background. In this way, visual inspection can be facilitated by simply switching the image of one surface.

In the case where imaging is performed with the background color of only one surface changed, the image plates (first image plate 40A and second image plate 40B) may be provided at least on one side.

The second embodiment is configured to insert white image plates (first image plate 40A and second image plate 40B) and take images with different background colors. However, the method of taking images with different background colors is not limited to this example. The positions to insert the image plates, lighting conditions, etc., in particular, may be changed as appropriate.

### [Other Embodiments]

### [Modification of Method of Determining Visibility]

In a case where medicines are imaged under predetermined imaging conditions, the visibility of the taken images mainly depends on color (including transparence) of the medicines. The color of the medicines can be identified by the type of the medicines. Therefore, in a case where the type of the medicines can be identified beforehand, the visibility of the medicines can be estimated. For example, in the case of transparent medicines, when the medicines are imaged under the condition in which the background color is black, the visibility is deteriorated. Similarly, deterioration in visibility is also found in the medicines similar in color to the background of the images to be obtained. The type of medicines can be identified from the prescription information. As to medicines prepared based on prescription information, the prescription information may be obtained to determine (estimate) whether the individual medicine images have good visibility or poor visibility.

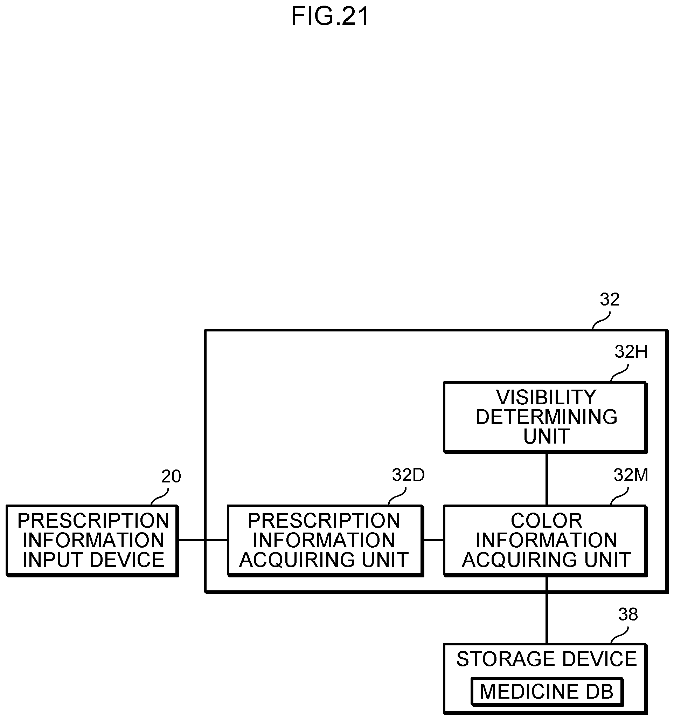

Figure 21 is a block diagram showing an example of the functions implemented by the processing device in a case where the visibility of individual medicine images is determined based on prescription information.

In this case, the processing device 32 implements the function of a color information acquiring unit 32M. The color information acquiring unit 32M acquires color information of the medicines to be inspected from the medicine DB, based on the prescription information acquired by the prescription information acquiring unit 32D. The visibility determining unit 32H determines the visibility of individual taken images based on the color information acquired by the color information acquiring unit 32M. For example, when the acquired color of the medicine is transparent or semi-transparent in the case of imaging the medicine under the condition in which the background color becomes black, individual medicine images of the medicine are determined to be poor in medicine visibility. Similarly, when the acquired color of the medicine is a black-like color (black, brown, etc.), individual medicine images of the medicine are determined to be poor in medicine visibility.

When the visibility determining unit 32H determines that the visibility is poor, the processing to enhance the visibility is performed. In other words, image processing is applied to the individual medicine images of the medicine that have been determined to be poor in visibility, and thereby the visibility is enhanced. Alternatively, the individual medicine images with poor visibility are switched with images with good visibility (images taken under the condition of a different background color) to enhance the visibility.

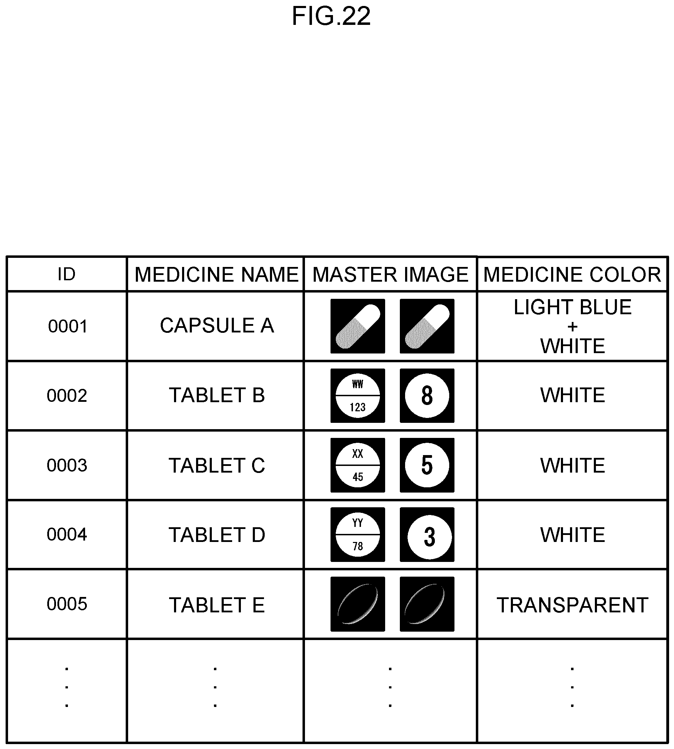

As described above, the color information of the medicine is obtained from the medicine DB. Figure 22 shows an example of the medicine DB. As shown in Figure 22, the information on color (color information) of each medicine is stored in association with the name of each medicine (and the master images). Therefore, once the name of the medicine is identified, the color of the medicine is identified.

In the above example, description has been given by taking an example in which the color information of each medicine is stored in the medicine DB, and the good/poor visibility is determined based on the color information of the medicine acquired from the medicine DB. However, instead, the medicine inspection support device 30 may be configured so that the good/poor visibility of the medicines is directly stored in the medicine DB. In this case, the good/poor visibility can be determined directly from the type (name) of the medicines.

Moreover, in a case where the good/poor visibility is determined from the taken images of the medicines, when the determination is made based on comparison of pixel values in images, RGB images may be used for comparison or a single-channel may be used for comparison. It is also possible to use Lab images, hsv images, lch conversion, etc.

### [Other Examples of Medicine to be Inspected]

In the embodiments disclosed, description has been given about, as an example, the case where the present invention is applied to a device for inspecting medicines that are prepared and packaged for one dose based on prescription. However, the present invention is applicable to other cases. The present invention is also applicable to the case of inspecting medicines not packaged for one dose, medicines prepared without being based on prescription, and so on.

### [Examples of Modification of Imaging]

The embodiments disclosed are configured to image medicines in a state where medicines are contained in a medicine package when the medicines in a one-dose package are imaged. However, the imaging device 10 may also be configured so that the medicines are imaged before being contained in the medicine package. For example, the imaging device 10 may be configured to image medicines in a state where the medicines are placed on a tray.

In addition, the embodiments disclosed are configured to image both the front and back surfaces of the medicine. However, the imaging device 10 may be configured to image only one surface. In this case, the image of only one surface is displayed.

### [Examples of Modification of Display]

In the embodiments disclosed, description has been given about, as an example, the case where the results of inspection of a plurality of medicine packages are displayed as a list. However, the mode of displaying the inspection results is not limited to this example. The medicine inspection support device 30 may also be configured so that each package is displayed individually. The medicine inspection support device 30 may also be configured so that each medicine is displayed individually.

The embodiments disclosed are configured so that in the case of displaying the individual medicine image of the medicine with poor visibility, the image after imaging processing to enhance the visibility is displayed. However, the image to be displayed may be switched to the image before image processing in response to an instruction from a user. In other words, it may be possible to optionally switch between the display of the image before image processing (so-called original image) and the display of the image after image processing. In this case, for example, a switch button may be displayed on the screen so as to switch the display in response to pressing (clicking) of the switch button. This applies to a case where the image is replaced with the image with enhanced visibility.

### [Application to Other Devices]

In the embodiments disclosed, description has been given about, as an example, the case where the present invention is applied to the medicine inspection support device. However, the present invention is applicable to other cases. The present invention is applicable to any devices that display taken images of medicines.

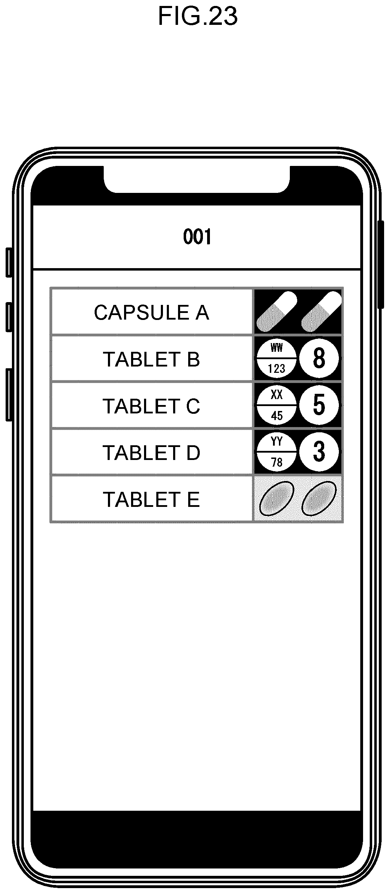

Figure 23 shows another example of in the case of displaying taken images of medicines. Figure 23 shows an example in the case of displaying taken images of medicines on a smartphone. Figure 23 particularly shows an example in the case of displaying taken images of medicines in a one-dose package on a smartphone. An image of each medicine (individual medicine image) is generated by cropping the image from a taken image of the medicine package. Figure 23 shows an example in the case where the individual medicine images of a tablet E have been determined to be poor in visibility and where the individual medicine images are replaced with images (images taken under the condition of a different background color) with good visibility and displayed. In this example, a smartphone display is an example of the display device.

### [Other Examples of Processing Device]

The processing device that constitutes the medicine inspection support device may be configured using various processors as below. The various processors includes, in addition to the CPU described in the above embodiments, a programmable logic device (PLD) that is a processor capable of changing circuit configuration after manufacturing, such as a field programmable gate array (FPGA), and an exclusive electrical circuit that is a processor having a circuit configuration exclusively designed for execution of specific processes, such as application specific integrated circuit (ASIC). The functions of the processing device may be implemented by one of the various processors, or may be implemented by two or more processors of the same kind or different kinds (for example, a combination of a plurality of FPGAs, or a combination of a CPU and an FPGA). One processor may implement a plurality of functions. As an example of implementing a plurality of functions by a single processor, there is a configuration which uses a processor implementing the function of the entire system including a plurality of functions with a single integrated circuit (IC) chip, as represented by a system on chip (SoC), etc. In this way, the various functions are implemented with one or more of the various processors in terms of the hardware structure. Furthermore, the hardware structures of the various processors each corresponds to an electrical circuit formed by combining circuit elements such as semiconductor elements, to be more specific.

In a case where a processor or an electrical circuit executes a program, a code of the program to be executed is stored in a ROM and/or in a non-transitory recording medium such as a flash ROM, and the processor refers to the software. The software stored in the non-transitory recording medium includes a program to execute the medicine inspection support method according to the present invention. The code may be recorded in a non-transitory recording medium such as various optical magnetic recording devices and semiconductor memory, instead of in the ROM. In processing using software, for example, a video RAM (VRAM) and a synchronous dynamic random access memory (SDRAM) are used as temporary storage areas, and data stored in, for example, an electronically erasable and programmable read only memory (EEPROM), which is not shown, may also be referred to.

### Reference Signs List

- 1: Medicine inspection support system
- 10: Imaging device
- 12A: First camera
- 12B: Second camera
- 14: Stage
- 16A: First lighting device
- 16A1: Light emitting unit
- 16B: Second lighting device
- 16B1: Light emitting unit
- 18: Roller
- 20: Prescription information input device
- 30: Medicine inspection support device
- 32: Processing device
- 32A: Imaging control unit
- 32B: Taken image acquiring unit
- 32C: Individual medicine image extracting unit
- 32D: Prescription information acquiring unit
- 32E: Master image acquiring unit
- 32F: Collating unit
- 32G: Inspection result determining unit
- 32H: Visibility determining unit
- 321: Image processing unit
- 32J: Display image generating unit
- 32K: Display control unit
- 32L: Image switching unit
- 32M: Color information acquiring unit
- 34: Operation device
- 36: Display device
- 38: Storage device
- 40A: First image plate
- 40B: Second image plate
- C1: Prescribed medicine information display block
- C2: Inspection result display block
- F: Frame
- FD: Detection frame
- IT: Individual medicine image
- IT0: Individual medicine image
- IT1: Individual medicine image
- IT2: Individual medicine image
- IT3: Individual medicine image
- ITP: Taken image
- ITP1: Taken image
- ITP2: Taken image
- ITP3: Taken image
- ITP4: Taken image
- T: Medicine
- TP: Medicine package
- S10 to S18: Procedure for inspecting medicine
- S20 to S24: Procedure for processing to enhance visibility of individual medicine images

## Claims

1. An image processing apparatus comprising a processor, wherein
the processor is configured to:
acquire a first taken image obtained by imaging medicines;
detect the medicines from the first taken image;
crop images of the detected medicines from the first taken image to generate individual medicine images; and
perform processing to enhance visibility of an individual medicine image with poor visibility.

2. The image processing apparatus according to claim 1, wherein
the processor determines whether visibility of each individual medicine image is good or poor, and performs the processing to enhance visibility of the individual medicine image with poor visibility.

3. The image processing apparatus according to claim 2, wherein
the processor determines whether the visibility of each individual medicine image is good or poor based on a difference between a pixel value in a region of a medicine in the individual medicine image and a reference value.

4. The image processing apparatus according to claim 3, wherein
the reference value is a pixel value in a region other than the region of the medicine in each individual medicine image, or in the first taken image.

5. The image processing apparatus according to claim 2, wherein
in a case where the medicines are prepared based on prescription information, the processor acquires the prescription information and determines whether visibility of each individual medicine image is good or poor based on the prescription information.

6. The image processing apparatus according to claim 5, wherein
the processor determines whether visibility of each individual medicine image is good or poor based on information about a type of each medicine identified based on the prescription information.

7. The image processing apparatus according to claim 6, wherein
the processor determines that the visibility of the individual medicine image is poor in a case where the medicine is transparent or semi-transparent.

8. The image processing apparatus according to claim 6, wherein
the processor determines that the visibility of the individual medicine image is poor in a case where the medicine has a color similar to a background color of the first taken image.

9. The image processing apparatus according to any one of claims 1 to 8, wherein
the processor applies image processing for emphasizing an edge of the medicine to the individual medicine image with poor visibility, to enhance visibility.

10. The image processing apparatus according to any one of claims 1 to 8, wherein
the processor acquires a second taken image obtained by imaging the medicines under a condition of a background color different from a background color of the first taken image, and replaces the individual medicine image with poor visibility, with an image cropped from the second taken image so as to enhance visibility.

11. The image processing apparatus according to any one of claims 1 to 10, wherein
the processor generates a display image that displays a list of the individual medicine images.

12. The image processing apparatus according to claim 11, wherein
the processor displays the display image on a display device.

13. The image processing apparatus according to any one of claims 1 to 12, wherein
the first taken image is an image obtained by imaging the medicines in one-dose package.

14. An image processing method comprising the steps of:
acquiring a first taken image obtained by imaging medicines;
detecting the medicines from the first taken image;
cropping images of the detected medicines from the first taken image to generate individual medicine images; and
performing processing to enhance visibility of an individual medicine image with poor visibility.
